# DEMANDE DE BREVET EUROPEEN

(11) **EP 2 910 840 A2**
(43) Date de publication de la demande: **26.08.2015**
(21) Numéro de dépôt: 15153754.5
(22) Date de dépôt: 04.02.2015
(51) Int. Cl.: F17C 1/06, F17C 1/16

(54) **Réservoir composite et son procédé de fabrication**

(30) Priorité: 12.02.2014 FR 1451086
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: Weber, Mathilde, 94250 GENTILLY (FR); Renault, Philippe, 78000 VERSAILLES (FR)
(74) Mandataire: De Cuenca, Emmanuel Jaime

(57) **Abrégé**

Réservoir composite pour le stockage d'hydrogène sous pression comprenant une enveloppe interne (2) en matière plastique étanche et une enveloppe extérieure (3) de renfort mécanique en matériau composite disposée autour d'au moins une partie de l'enveloppe interne (2), le réservoir (1) comprenant une structure (4) d'évacuation du gaz susceptible de diffuser au travers de l'enveloppe interne (2), caractérisé en ce que la structure d'évacuation comprend au moins une couche (4) de matériau drainant ayant une perméabilité sélective pour l'hydrogène, ladite couche (4) de matériau drainant étant disposée dans l'épaisseur du réservoir et comprenant une extrémité (14) affleurante à la surface extérieure du réservoir (1

## Description

La présente invention concerne un réservoir composite ainsi que son procédé de fabrication.

L'invention concerne plus particulièrement un réservoir composite pour le stockage d'hydrogène sous pression comprenant une enveloppe interne en matière plastique étanche et une enveloppe extérieure de renfort mécanique en matériau composite disposée autour d'au moins une partie de l'enveloppe interne, le réservoir comprenant une structure d'évacuation du gaz susceptible de diffuser au travers de l'enveloppe interne.

Les réservoirs composites de stockage de gaz sous pression comprennent généralement une enveloppe interne étanche (appelée « liner ») renforcée extérieurement par une couche de renforcement mécanique (généralement un mélange de fibres de carbone et/ou de verre et de résine telle que de l'époxy).

Ces réservoirs sont notamment prévus pour le stockage de l'hydrogène gazeux, ou du gaz naturel gazeux, ou de l'hélium à haute pression (par exemple entre 250 et 1000bar).

Les liners de ces réservoirs sont susceptibles de se déformer lors de leur vidange. En effet, du gaz est susceptible de diffuser au travers du liner ainsi que dans les matériaux (liner polymère et composite) et aux interfaces. Ce gaz peut s'accumuler dans les matériaux liner et polymère et aux interfaces. Lors de la vidange du réservoir, sous l'effet du relâchement de la pression, les poches de gaz accumulé peuvent croitre ou bien se créer à partir du gaz solubilisé dans le liner et/ou le composite. En conséquence, le liner peut se déformer de façon permanente ou non. Un risque associé est la fissuration du liner et donc une fuite de gaz.

Le phénomène est d'autant plus important que la perméabilité du gaz dans les matériaux est élevée et que la pression est grande. Le risque est donc plus important pour les stockages d'hydrogène et d'hélium à haute pression.

Pour résoudre ce problème, le document WO2012020435A1 décrit l'utilisation d'une vessie souple insérée dans le liner. Le gaz est contenu dans la vessie souple qui est amovible et peut être changée en cas de vieillissement prématuré.

Le document WO2010091062A1 décrit une structure d'évents permettant l'évacuation du gaz stocké à l'interface entre le liner et la structure composite. Les évents sont composés d'un fil et d'un dispositif d'adhésion permettant de créer un vide pour permettre une diffusion du gaz dans ce vide et son drainage vers un des dômes du réservoir.

Le document FR2956185A1 décrit un réservoir muni de canaux d'évacuation du gaz le long de l'embase via un matériau drainant disposé entre le liner et le composite.

Le document US 20120072209A1 décrit une solution de collecte du gaz diffusant au travers du liner via des canaux créés dans le liner.

Les documents US20120018314A1 et US2012048865A1 décrivent des solutions de collecte du gaz diffusant au travers du liner via une couche poreuse disposée entre le liner et le composite.

Aucune de ces solutions n'est cependant satisfaisante car, soit elles sont coûteuses et difficilement industrialisables, soit elles évacuent de façon insuffisante le gaz ayant diffusé, soit elles ne permettent pas d'écarter complètement le risque de déformation du liner.

Un but de la présente invention est de pallier tout ou partie des inconvénients de l'art antérieur relevés ci-dessus.

A cette fin, le réservoir selon l'invention, par ailleurs conforme à la définition générique qu'en donne le préambule ci-dessus, est essentiellement caractérisé en ce que la structure d'évacuation comprend au moins une couche de matériau drainant ayant une perméabilité sélective pour l'hydrogène, ladite couche de matériau drainant étant disposée dans l'épaisseur du réservoir et comprenant une extrémité affleurante à la surface extérieure du réservoir.

Par ailleurs, des modes de réalisation de l'invention peuvent comporter l'une ou plusieurs des caractéristiques suivantes :
- la au moins une couche de matériau drainant est située dans l'épaisseur de l'enveloppe interne,
- la au moins une couche de matériau drainant est située dans l'épaisseur de enveloppe extérieure et/ou entre l'enveloppe interne et l'enveloppe extérieure,
- la au moins une couche de matériau drainant comprend un textile et/ou un faisceau de membranes polymères poreuses et/ou creuses à perméabilité sélective pour l'hydrogène,
- la au moins une couche de matériau drainant comprend un textile et/ou un faisceau de membranes cylindriques ayant un diamètre compris entre 0,05 mm et 0,5 mm,
- la couche de matériau drainant comprend un textile et/ou un faisceau de membranes formant un maillage dont les mailles ont des dimensions comprises 0,5 mm et 20 mm et de préférence entre 1 mm et 10 mm,
- la couche de matériau drainant comprend au moins l'un parmi : un polyaramide, un polyetherimide ou un copolymère à base de polyaramide ou polyetherimide ou un polyuréthane,
- le réservoir comprend une couche de matériau drainant située dans l'épaisseur de l'enveloppe interne qui est adjacente à l'enveloppe extérieure et de préférence dans à la moitié ou le quart d'épaisseur de l'enveloppe interne qui est adjacent(e) à l'enveloppe extérieure,
- la au moins une couche de matériau drainant a une épaisseur comprise entre 0,1 mm et 1 mm et de préférence entre 0.1 mm et 0.5 mm,
- l'enveloppe extérieure de renfort mécanique comprend des fibres et une résine, notamment du type époxy

L'invention concerne également un procédé de fabrication d'un réservoir composite pour le stockage d'hydrogène sous pression comprenant une enveloppe interne en matière plastique étanche et une enveloppe extérieure de renfort mécanique en matériaux composite disposée sur au moins une partie de l'enveloppe interne, le procédé comprenant une étape de mise forme de l'enveloppe interne par moulage dans un moule et une étape dépôt d'une enveloppe de renfort mécanique en matériau composite autour de l'enveloppe internée moulée, dans lequel l'étape de mise en forme comprend une insertion, dans ledit moule et préalablement au moulage de l'enveloppe interne, d'une couche de matériau drainant, ladite couche de matériau drainant comprenant une extrémité affleurante à la surface extérieure du réservoir.

L'invention concerne également un procédé de fabrication d'un réservoir composite pour le stockage d'hydrogène sous pression comprenant une enveloppe interne étanche en matière plastique et une enveloppe extérieure de renfort mécanique en matériau composite disposée sur au moins une partie de l'enveloppe interne, le procédé comprenant une étape de bobinage par enroulement filamentaire d'une couche de renfort mécanique en matériau composite autour d'une l'enveloppe interne étanche, dans lequel, avant au moins une étape de bobinage de la couche de renfort mécanique, une étape de bobinage d'une couche de matériau drainant ayant une perméabilité sélective avec l'hydrogène autour de l'enveloppe interne étanche, ladite couche de matériau drainant comprenant une extrémité affleurante à la surface extérieure du réservoir.

Selon une autre particularité possible, la couche de matériau drainant est bobinée autour de l'enveloppe interne entre deux couches de renfort mécaniques bobinées autour de l'enveloppe interne.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue en coupe, schématique et partielle, illustrant un exemple de structure de réservoir de mise en oeuvre de l'invention,
- les figures 2 à 4 représentent des vues en coupes, schématiques et partielles, d'un détail de la structure de l'épaisseur du réservoir de la figure 1 selon respectivement trois exemples de réalisation possibles de l'invention,
- les figures 5 et 6 représentent des vue en perspective, schématiques et partielles, illustrant respectivement deux variantes d'un détail de la fabrication d'un réservoir selon l'invention.

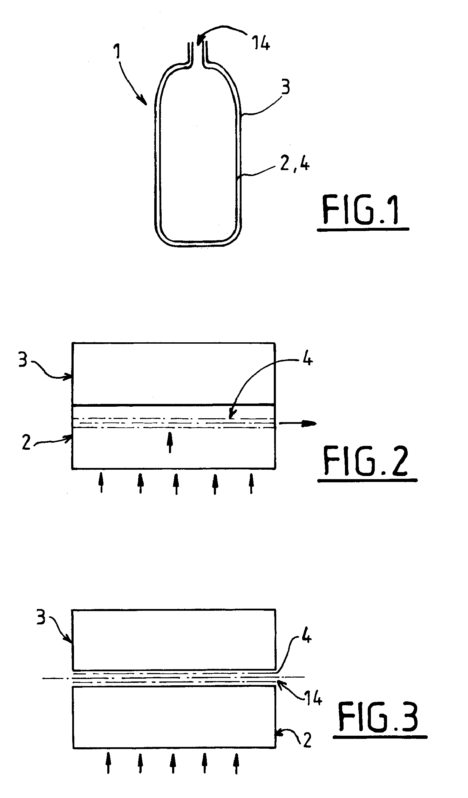

La figure 1 illustre schématiquement un exemple de réservoir composite pour le stockage d'hydrogène sous pression. Le réservoir 1 comprend une enveloppe interne 2 en matière plastique étanche (liner) et une enveloppe extérieure 3 de renfort mécanique en matériau composite disposée sur au moins une partie de l'enveloppe interne 2.

Classiquement, l'enveloppe 2 interne est composée d'un polymère thermoplastique (par exemple de type polyéthylène, polyamide, copolymères à base de polyéthylène et/ou polyamide ou polyuréthane). L'enveloppe extérieure 3 peut quant à elle être constituée de fibres (verre et/ou carbone) associées à une résine (par exemple de type époxy ou thermoplastique).

Pour éviter ou minimiser les problèmes engendrés par le gaz diffusant au travers de l'enveloppe 2 interne le réservoir 1 comprend une structure 4 d'évacuation du gaz susceptible de s'accumuler dans son épaisseur.

Cette structure d'évacuation comprend au moins une couche 4 de matériau drainant ayant une perméabilité sélective pour l'hydrogène. Cette couche 4 de matériau drainant est disposée dans l'épaisseur du réservoir 1 et comprend une extrémité débouchant sur la surface extérieure du réservoir. C'est-à-dire qu'une extrémité de la couche 4 de matériau drainant est soumise à la pression atmosphérique autour du réservoir 1.

De cette façon, la perméabilité sélective à l'hydrogène de la couche 4 en matériau drainant et sa communication avec l'atmosphère collecte l'hydrogène de perméation et l'évacue de façon efficace.

Par « perméabilité sélective à l'hydrogène » on désigne une propriété du matériau qui le rend particulièrement perméable au gaz contenu dans le réservoir, par exemple à l'hydrogène et notamment une perméabilité pour le gaz contenu dans le réservoir notamment pour l'hydrogène supérieure à la perméabilité du gaz dans le liner thermoplastique et le composite.

Le gaz est drainé jusqu'à l'extérieur du réservoir 1, par exemple au niveau du dôme situé au niveau du col de la bouteille en faisant affleurer les fibres jusqu'à la surface du matériau composite 3. En variante, le gaz est évacué au niveau du pied du réservoir.

La couche 4 de matériau drainant comprend par exemple un textile et/ou un faisceau de membranes polymères poreuses et/ou creuses à perméabilité sélective pour l'hydrogène. Par exemple, la couche 4 de matériau drainant comprend un textile et/ou un faisceau de membranes cylindriques ayant, par exemple, un diamètre compris entre 0,05 mm et 0,5 mm.

Par « membrane creuse ayant une perméabilité sélective pour l'hydrogène » on désigne des membranes synthétiques (en polymère notamment) conçues pour séparer uniquement une ou plusieurs espèces chimiques autres que l'hydrogène d'un mélange gazeux qui circule dans la membrane. C'est-à-dire que l'hydrogène traverse la membrane mais au moins une autre espèce chimique est séparée et ne la traverse pas (par exemple au moins l'un parmi : l'azote, l'oxygène, le dioxyde de carbone). Les membranes sont creuses et éventuellement également poreuses. La séparation de gaz est ainsi réalisée par diffusion dans des micro-pores de membrane sur la base de la masse moléculaire des molécules (cas poreux) ou par dissolution-diffusion (cas non poreux).

Le textile ou faisceau de membranes forme de préférence un maillage dont les mailles ont des dimensions comprises 0,5mm et 20 mm et de préférence entre 1mm et 10 mm.

De préférence, la couche 4 de matériau drainant comprend au moins l'un parmi : un polyaramide, un polyetherimide ou un copolymère à base de polyaramide ou polyetherimide. Par exemple, la couche de matériau drainant comprend des membranes à fibres poreuses ou creuses commercialisées par la société MEDAL, notamment sous la référence AL21360PX.

Comme illustré à la figure 2, la couche 4 de matériau drainant peut être située dans l'épaisseur de l'enveloppe interne 2. De préférence, la couche 4 de matériau drainant est située à la moitié de l'épaisseur de l'enveloppe interne 2 qui est adjacente à l'enveloppe extérieure 3. Encore plus préférentiellement, cette couche 4 de matériau drainant peut être située dans le quart de l'épaisseur de l'enveloppe interne 2 qui est adjacent à l'enveloppe extérieure 3.

Bien entendu, et comme illustré à la figure 3, la couche 4 de matériau drainant peut être située entre l'enveloppe interne 2 et l'enveloppe extérieure 3.

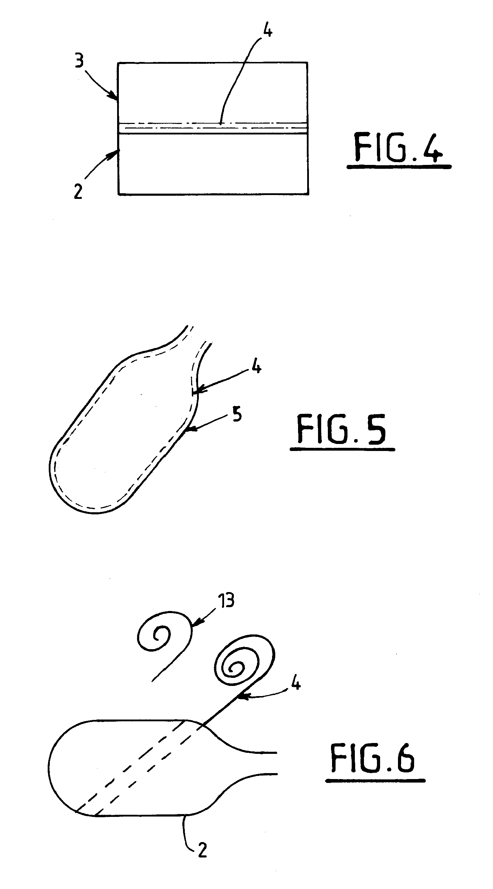

De même, et comme illustré à la figure 4, la couche 4 de matériau drainant peut être située dans l'épaisseur de l'enveloppe extérieure 3.

La couche 4 peut avoir une épaisseur comprise par exemple entre 0,1 mm et 1 mm.

Bien entendu, plusieurs couches 4 de matériau drainant peuvent être prévues dans une même enveloppe 2, 3 et/ou combinant plusieurs configurations des figures 2 à 4.

La couche 4 de matériau drainant peut ainsi être dans la même phase que l'enveloppe 2 interne ou que l'enveloppe extérieure 3, sans nécessité de créer un volume vide. Ceci simplifie la structure et la fabrication du réservoir.

La figure 5 illustre schématiquement et partiellement une partie d'un procédé de fabrication d'un tel réservoir. De la fibre ayant une perméabilité sélective à l'hydrogène peut être insérée dans le moule 5 de mise en forme du de l'enveloppe 2 interne avant moulage. La fibre 4 est de préférence sous la forme d'une trame textile permettant de prédéfinir un réseau en deux dimensions.

Dans l'exemple de la figure 6, la fibre 4 formant la couche de matériau drainant est bobinée autour de l'enveloppe 2 interne et ensuite le matériau composite 13 formant l'enveloppe extérieure 3 est bobiné par-dessus selon un procédé connu en soit (enroulement filamentaire).

De cette façon, la résine 5 du matériau composite 13 va mouiller la fibre 4 creuse.

Après cuisson de l'ensemble, la fibre 4 creuse est bien incluse dans le composite 3 et le mécanisme d'évacuation de l'hydrogène est réalisé via le corps creux. Bien entendu, la fibre 4 drainante peut également être bobinée en couche intermédiaire dans le matériau 13 composite (entre deux couches de fibres de carbone, cf. figue 4).

Des essais comparatifs ont mis en évidence les avantages de l'invention.

Ces essais ont été réalisés sur des échantillons de disques de polymère (résine époxy) respectivement :
- dits « vierges » ou « sans trame » (c'est-à-dire sans couche de matériau drainant dans leur épaisseur),
- comprenant une couche de fils textile simple (quadrillage de fils disposé à mi épaisseur du disque= « trame textile »), et
- comprenant une couche d'un quadrillage de fibres à perméabilité sélective commercialisée par la société MEDAL (« trame fibres »).

Les échantillons de résine ont été découpés en forme de disque de façon que les fibres affleurent à l'extérieur du disque.

Le tableau ci-dessous illustre les résultats pour dix tests (numéroté 1 à 10 dans la première colonne « référence »).

La structure de chaque échantillon testé (avec ou sans trame de fibres ou de textile et la taille D en millimètre de la structure fibreuse ou textile s'il y en a une) est indiquée dans la deuxième colonne.

La troisième colonne indique la taille (en mm) des mailles de la couche fibreuse ou de textile. La quatrième colonne indique le niveau de pression (en bar) du gaz (hydrogène) auquel est soumise une face de l'échantillon. La cinquième colonne indique le débit Qd de gaz (en mbar par litre par seconde = mbar.L.s⁻¹) traversant le disque échantillon (c'est-à-dire le débit de gaz qui n'est pas collecté par une éventuelle couche de drainage). La sixième colonne indique le débit Qc de gaz (en mbar par litre par seconde = mbar.L.s⁻¹) qui est collectée par une éventuelle couche de drainage (c'est-à-dire le gaz qui s'évacue latéralement de l'échantillon sans traverser l'échantillon jusqu'à l'autre face). La septième colonne indique le rapport Qc/Qd entre les grandeurs de la sixième et cinquième colonne (sans unité).

Les essais ont été réalisés avec de l'hydrogène à 27°C.

| **Réf. du test** | **Structure de l'échantillon** | **Maille (mm)** | **P (bar)** | **Qd (mbar.L.s-1)** | **Qc (mbar.L.s-1)** | **Qc/Qd** |
|---|---|---|---|---|---|---|
| 1 | Trame textile fine (D ≈ 0,30 à 0,35 mm) | 2,0 - 2,5 | 103.6 | 4.24E-05 | 8.92E-06 | 0.21 |
| 2 | Sans trame | / | 51.7 | 2.22E-05 | 2.38E-06 | 0.11 |
| 3 | Sans trame | / | 102.2 | 4.44E-05 | 7.41E-06 | 0.17 |
| 4 | Sans trame | / | 52 | 2.64E-05 | 6.15E-06 | 0.23 |
| 5 | Trame fibres MEDAL (D ≈ 0,15 mm) | 1,0-2,0 | 151.2 | 1.94E-06 | 1.28E-04 | 66.0 |
| 6 | Trame fibres MEDAL (D ≈ 0,15 mm) | 1,0-2,0 | 101.8 | 1.69E-06 | 9.73E-05 | 57.6 |
| 7 | Trame fibres MEDAL (D ≈ 0,15 mm) | 1,0-2,0 | 51.7 | 1.01E-06 | 5.58E-05 | 55.2 |
| 8 | Trame textile (D ≈ 0,8-0,9 mm) | 2,0 - 2,5 | 51.4 | 5.63E-06 | 4.04E-05 | 7.2 |
| 9 | Trame textile (D ≈ 0,8-0,9 mm) | 2,0 - 2,5 | 102.1 | 1.01E-05 | 7.73E-05 | 7.7 |
| 10 | Trame textile (D ≈ 0,8-0,9 mm) | 2,0 - 2,5 | 151.6 | 1.54E-05 | 1.04E-04 | 6.8 |

Pour les tests 5 à 7 la trame de fibres utilisée est celle commercialisée par la société MEDAL sous la référence AL2130PX et elle est disposée à mi-épaisseur du disque.

La comparaison des débits de fuite mesurés sur la tranche de l'échantillon (Qc) avec le débit Qd qui n'est pas évacué par la couronne met en évidence les propriétés avantageuses d'évacuation du gaz de diffusion.

La comparaison des essais ci-dessus met en évidence que le drainage avec les fibres à perméabilité sélective pour l'hydrogène (échantillons 5 à 7) est nettement plus important que celui des autres échantillons dans les mêmes conditions de test (pression, température). En effet ce drainage par la couche à perméabilité sélective est de sept à neuf fois plus important que pour une couche textile « simple » sans perméabilité sélective pour l'hydrogène.

On constate également que la taille des fibres textiles influe également dans une moindre mesure sur l'efficacité du drainage.

## Revendications

1. Réservoir composite pour le stockage d'hydrogène sous pression comprenant une enveloppe interne (2) en matière plastique étanche et une enveloppe extérieure (3) de renfort mécanique en matériau composite disposée autour d'au moins une partie de l'enveloppe interne (2), le réservoir (1) comprenant une structure (4) d'évacuation du gaz susceptible de diffuser au travers de l'enveloppe interne (2), **caractérisé en ce que** la structure d'évacuation comprend au moins une couche (4) de matériau drainant ayant une perméabilité sélective pour l'hydrogène, ladite couche (4) de matériau drainant étant disposée dans l'épaisseur du réservoir et comprenant une extrémité (14) affleurante à la surface extérieure du réservoir (1), et **en ce que** la au moins une couche (4) de matériau drainant comprend un textile de membranes polymères creuses à perméabilité sélective pour l'hydrogène et/ou un faisceau de membranes polymères creuses à perméabilité sélective pour l'hydrogène.

2. Réservoir selon la revendication 1, **caractérisé en ce que** les membranes polymère creuses à perméabilité sélective pour l'hydrogène sont des membranes de séparation par diffusion préférentielle de l'hydrogène par rapport à au moins une autre espèce chimique que l'hydrogène d'un mélange gazeux.

3. Réservoir selon la revendication 1 ou 2, **caractérisé en ce que** la au moins une couche (4) de matériau drainant est située dans l'épaisseur de l'enveloppe interne (2).

4. Réservoir selon l'une quelconque des revendications 1 à 3, **caractérisé en ce que** la au moins une couche (4) de matériau drainant est située dans l'épaisseur de enveloppe extérieure (3) et/ou entre l'enveloppe interne (2) et l'enveloppe extérieure (3).

5. Réservoir selon l'une quelconque des revendications 1 à 4, **caractérisé en ce que** les membranes polymères creuses sont poreuses.

6. Réservoir selon l'une quelconque des revendications 1 à 5, **caractérisé en ce que** la au moins une couche (4) de matériau drainant comprend un textile et/ou un faisceau de membranes cylindriques ayant un diamètre compris entre 0,05 mm et 0,5 mm.

7. Réservoir selon l'une quelconque des revendications 1 à 6, **caractérisé en ce que** la couche (4) de matériau drainant comprend un textile et/ou un faisceau de membranes formant un maillage dont les mailles ont des dimensions comprises 0,5mm et 20 mm et de préférence entre 1 mm et 10 mm.

8. Réservoir selon l'une quelconque des revendications 1 à 7, **caractérisé en ce que** la couche (4) de matériau drainant comprend au moins l'un parmi : un polyaramide, un polyetherimide ou un copolymère à base de polyaramide ou polyetherimide.

9. Réservoir selon l'une quelconque des revendications 1 à 8, **caractérisé en ce qu'**il comprend une couche (4) de matériau drainant située dans l'épaisseur de l'enveloppe interne (2) qui est adjacente à l'enveloppe extérieure (3) et de préférence dans à la moitié ou le quart d'épaisseur de l'enveloppe interne (2) qui est adjacent(e) à l'enveloppe extérieure (3).

10. Réservoir selon l'une quelconque des revendications 1 à 9, **caractérisé en ce que** la au moins une couche (4) de matériau drainant a une épaisseur comprise entre 0,1 mm et 1 mm et de préférence entre 0.1 mm et 0.5 mm.

11. Réservoir selon l'une quelconque des revendications 1 à 10, **caractérisé en ce que** l'enveloppe extérieure (3) de renfort mécanique comprend des fibres et une résine, notamment du type époxy.

12. Procédé de fabrication d'un réservoir composite pour le stockage d'hydrogène sous pression comprenant une enveloppe interne (2) en matière plastique étanche et une enveloppe extérieure (3) de renfort mécanique en matériaux composite disposée sur au moins une partie de l'enveloppe interne (2), le procédé comprenant une étape de mise forme de l'enveloppe interne (2) par moulage dans un moule (5) et une étape dépôt d'une enveloppe de renfort mécanique en matériau composite autour de l'enveloppe (2) internée moulée, **caractérisé en ce que** l'étape de mise en forme comprend une insertion, dans ledit moule (5) et préalablement au moulage de l'enveloppe interne (2), d'une couche de matériau drainant, ladite couche (4) de matériau drainant comprenant une extrémité (14) affleurante à la surface extérieure du réservoir (1) et **en ce que** la au moins une couche (4) de matériau drainant comprend un textile de membranes polymères creuses à perméabilité sélective pour l'hydrogène et/ou un faisceau de membranes polymères creuses à perméabilité sélective pour l'hydrogène..

13. Procédé de fabrication d'un réservoir composite pour le stockage d'hydrogène sous pression comprenant une enveloppe interne (2) étanche en matière plastique et une enveloppe extérieure (3) de renfort mécanique en matériau composite disposée sur au moins une partie de l'enveloppe interne (2), le procédé comprenant une étape de bobinage par enroulement filamentaire d'une couche (13) de renfort mécanique en matériau composite autour d'une enveloppe interne (2) étanche, **caractérisé en ce qu'**il comporte, avant au moins une étape de bobinage de la couche (13) de renfort mécanique, une étape de bobinage d'une couche (4) de matériau drainant ayant une perméabilité sélective avec l'hydrogène autour l'enveloppe interne (2) étanche, ladite couche (4) de matériau drainant comprenant une extrémité (14) affleurante à la surface extérieure du réservoir (1).

14. Procédé selon la revendication 13, **caractérisé en ce que** la couche (4) de matériau drainant est bobinée autour l'enveloppe interne entre deux couches de renfort mécaniques (13) bobinées autour de l'enveloppe (2) interne.
